# FASCICULE DE BREVET EUROPEEN

(11) **EP 3 393 890 B1**
(45) Date de publication et mention de la délivrance du brevet: **01.01.2020**
(21) Numéro de dépôt: 16813087.0
(22) Date de dépôt: 25.11.2016
(51) Int. Cl.: B62D 25/18, B62D 37/02

(54) **PASSAGE DE ROUE DE VEHICULE AUTOMOBILE EQUIPE D'UN ELEMENT AERODYNAMIQUE**
MIT EINEM AERODYNAMISCHEN ELEMENT AUSGESTATTETER KRAFTFAHRZEUGRADLAUF
MOTOR VEHICLE WHEEL ARCH PROVIDED WITH AN AERODYNAMIC ELEMENT

(30) Priorité: 21.12.2015 FR 1562897
(43) Date de publication de la demande: 31.10.2018
(73) Titulaire: RENAULT s.a.s., 92100 Boulogne-Billancourt (FR)
(72) Inventeur: REY, Patrick, 75012 Paris (FR); ROUAINAI, David, 78160 Marly le Roi (FR); MALLARD, Stephane, 78190 Montigny le Bretonneux (FR)
(86) Numéro de dépôt international: PCT/FR2016/053097
(87) Numéro de publication internationale: WO 2017/109312

(56) Documents cités:
- EP-A1- 0 556 733
- EP-A1- 0 626 308
- EP-A1- 0 791 525
- EP-A1- 0 903 285
- WO-A1-90/02073
- FR-A1- 2 638 416
- US-A1- 2004 026 914

## Description

L'invention concerne un passage de roue de véhicule automobile équipé d'un élément aérodynamique.

Dans le cadre de la sévérisation des contraintes de dépollution, les constructeurs automobiles cherchent à optimiser l'aérodynamique de l'ensemble du véhicule. Les écoulements dans les passages de roue avant, dont le flux provient à la fois du compartiment moteur et du soubassement amont, peuvent être très perturbés dans certaines zones. On peut ainsi observer des écoulements transversaux à la direction de déplacement du véhicule. Ces écoulements transversaux ont tendance à créer des zones de décollement/recirculation des flux d'air, entrainant un élargissement du sillage aérodynamique du véhicule et une dégradation de la performance aérodynamique de ce dernier.

L'invention vise à pallier ces inconvénients en proposant un passage de roue de véhicule automobile comprenant une bande allongée courbe destinée à entourer partiellement une roue de véhicule automobile, ladite bande présentant une face concave destinée à s'étendre sensiblement en regard d'une bande de roulement périphérique de la roue. Selon l'invention, une partie de la face concave présente un élément aérodynamique solidaire de la bande et présentant une face pourvue d'aspérités définies par une pluralité de creux et de protubérances, au moins une partie de ladite pluralité de creux définissant des canaux d'évacuation de fluide sensiblement parallèles à la direction longitudinale de ladite bande. Un tel passage de roue est connu du document publié WO90/02073 qui décrit un passage de roue comprenant un élément aérodynamique intégré permettant de réduire la propagation du brouillard créé par le déplacement du véhicule sur une surface mouillée.

Lors du roulement du véhicule, les écoulements transversaux viennent ainsi impacter les protubérances, ce qui entraine une réduction de leur débit, ces écoulements s'écoulant ensuite le long des canaux définis par les creux. Un tel agencement permet ainsi de réduire les vitesses transversales de l'écoulement et d'évacuer une partie du flux vers le soubassement du véhicule via les canaux. Cela entraine une réduction locale du sillage et une amélioration de la performance globale du véhicule. Selon l'invention, la bande présente une ouverture entre l'élément aérodynamique et un bord d'extrémité de la bande. Ceci permet également de favoriser l'évacuation du fluide guidé par les canaux vers le soubassement du véhicule lorsque le bord d'extrémité est à proximité du soubassement.

Le passage de roue selon l'invention peut comprendre en outre une ou plusieurs des caractéristiques suivantes :
- l'élément aérodynamique présente une pluralité de protubérances sensiblement alignées suivant des directions parallèles à ladite direction longitudinale de la bande. Ceci peut favoriser la redirection d'une partie au moins du fluide vers les canaux.
- L'élément aérodynamique est adjacent à un bord d'extrémité de la bande, ceci permet de favoriser l'évacuation du fluide guidé par les canaux vers le soubassement du véhicule lorsque ce bord d'extrémité est situé à proximité du soubassement du véhicule.
- Les protubérances de l'élément aérodynamique peuvent être ponctuelles et discontinues, par exemple réparties de manière régulière sur toute la face de l'élément aérodynamique, ou peuvent s'étendre de manière continue suivant des directions sensiblement parallèles à la direction longitudinale de la bande du passage de roue. Ce type de protubérances présente l'avantage d'être simple à réaliser. Il peut s'agir de pyramides, par exemple présentant une base carrée, ou encore de parois s'étendant perpendiculairement ou sensiblement perpendiculairement à la face concave de la bande du passage de roue.
- L'élément aérodynamique est fixé à ladite bande par clippage, collage, soudage, rivetage ou vissage. Il est ainsi possible de fabriquer l'élément aérodynamique indépendamment du passage de roue, et d'équiper des véhicules après leur construction ou de remplacer des éléments aérodynamiques endommagés.

L'invention concerne également un élément aérodynamique pour un passage de roue de véhicule automobile selon l'invention, cet élément aérodynamique présentant une face pourvue d'aspérités définies par une pluralité de creux et de protubérances, au moins une partie de ladite pluralité de creux définissant des canaux parallèles à une direction prédéterminée.

L'élément aérodynamique peut en outre présenter une ou plusieurs des caractéristiques précédemment décrites.

L'invention concerne enfin un véhicule automobile comportant au moins un passage de roue selon l'invention, dans lequel l'élément aérodynamique est disposé sur une partie arrière du passage de roue.

Avantageusement, les passages de roue des roues avant du véhicule peuvent être équipés d'un élément aérodynamique, et, optionnellement les passages de roue des roues arrière sont également équipés d'un élément aérodynamique.

L'invention est maintenant décrite en référence aux dessins annexés, non limitatifs, dans lesquels :
- la figure 1 représente partiellement la partie avant gauche d'un véhicule automobile, notamment la roue et le passage de roue qui l'entoure ;
- la figure 2 représente un agrandissement du passage de roue de la figure 1 équipé d'un élément aérodynamique selon un mode de réalisation ;
- la figure 3 représente un agrandissement de l'élément aérodynamique de la figure 2 ;
- la figure 4 représente partiellement un passage de roue équipé d'un élément aérodynamique selon un autre mode de réalisation ;
- les figures 5a et 5b sont des vues de dessus d'un véhicule, le véhicule représenté figure 5a présentant des passages de roue avant tel que représenté sur les figures 1 et 2, le véhicule représenté figure 5a présentant des passages de roue avant dépourvus d'élément aérodynamique.

Dans la présente description, les termes avant, arrière, supérieur, inférieur, font référence aux directions avant et arrière du véhicule, lorsque le passage de roue est monté sur le véhicule. Les axes X, Y, Z, correspondent respectivement à l'axe longitudinal (d'avant en arrière), transversal et vertical du véhicule.

Par sensiblement horizontal, longitudinal ou vertical, on entend une direction/un plan formant un angle d'au plus ±20°, voire d'au plus 10° ou d'au plus 5° avec une direction/un plan horizontal, longitudinal ou vertical.

Par sensiblement parallèle, perpendiculaire ou à angle droit, on entend une direction/un angle s'écartant d'au plus ±20°, voire d'au plus 10° ou d'au plus 5° d'une direction parallèle, perpendiculaire ou d'un angle droit.

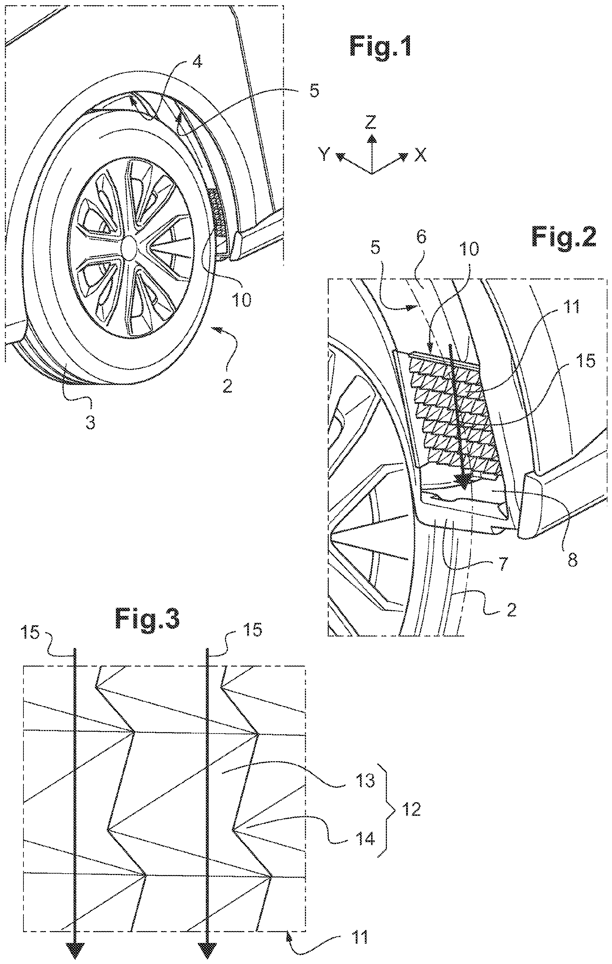

La figure 1 représente partiellement la partie avant gauche d'un véhicule automobile 1. On y distingue une roue 2 dont la bande de roulement 3, s'étendant en périphérie de la roue, entre en contact avec le sol lors du roulement du véhicule. Cette roue 2 est en partie entourée par un passage de roue 4.

Le passage de roue 4 comprend une bande 5 allongée et courbe entourant partiellement la roue. Cette bande 5 est fixée de manière usuelle à la caisse du véhicule. Les figures 1, 2 montrent que cette bande 5 s'étend sensiblement en regard d'une partie de la bande de roulement 3 de la roue qui n'est pas en contact avec le sol, sensiblement parallèlement à celle-ci. En particulier, la bande 5 du passage de roue 4 présente une face concave 6 s'étendant en regard de la bande de roulement 3.

Selon l'invention, une partie de cette face concave 6 présente un élément aérodynamique 10 solidaire de la bande 5 du passage de roue 4. On notera que cet élément aérodynamique 10 est disposé sur la partie arrière du passage de roue 4, à savoir la partie du passage de roue 4 située en aval de la roue par rapport à l'avancement du véhicule. L'élément aérodynamique 10 est ainsi disposé sur une partie du passage de roue 4 située en arrière de la roue 2 et reçoit un flux d'air provenant du compartiment moteur et de la partie avant du soubassement du véhicule lors du roulement du véhicule.

Tel que visible plus en détails sur les figures 2 et 3, l'élément aérodynamique 10 représenté dans ce mode de réalisation, présente une face 11, dirigée vers la roue 2, pourvue d'aspérités 12 formées d'une pluralité de creux 13 et de protubérances 14.

Dans cet exemple, les protubérances 14 sont discontinues. On notera qu'elles sont réparties régulièrement sur la surface de l'élément aérodynamique 10. Elles se présentent ici sous la forme de pyramides à base carrée. Ces pyramides sont alignées suivant une direction sensiblement parallèle à la direction longitudinale de la bande 5. Autrement dit, elles sont alignées suivant une direction sensiblement parallèle à la direction Z lorsque l'élément aérodynamique 10 est monté sur le véhicule. Les protubérances sont ici jointes uniquement par leur base, mais on pourrait également envisager des protubérances entièrement disjointes. En outre, une partie des creux 13 situés entre les protubérances 14 sont alignés sensiblement parallèlement à la direction longitudinale de la bande 5 et s'étendent dans la continuité les uns des autres, définissant ainsi des canaux d'évacuation 15 pour un fluide provenant du moteur ou du soubassement avant lors de l'avancement du véhicule. Pour davantage de clarté, les canaux 15 sont symbolisés par des flèches sur les figures 2 et 3, un seul canal 15 étant représenté sur la figure 2.

Selon l'invention et tel que visible plus précisément sur la figure 2, l'élément aérodynamique 10 est situé à proximité d'un bord d'extrémité 7 de la bande 5. Plus précisément, l'élément aérodynamique 10 est immédiatement adjacent à une ouverture 8 pratiquée dans la bande 5, cette ouverture 8 étant adjacente au bord d'extrémité 7, situé en regard du sol.

Lors du roulement du véhicule, les écoulements transversaux provenant du compartiment moteur du véhicule et du soubassement viennent impacter contre les aspérités 12 de l'élément aérodynamique 10, ce qui permet de réduire leur débit et de les diriger le long des canaux 15 vers la partie inférieure du véhicule via l'ouverture 8.

Avantageusement, l'élément aérodynamique 10 peut s'étendre sur toute la largeur de la bande 5. A titre d'exemple, pour un véhicule particulier, un élément aérodynamique de 80 mm sur 80 mm placé au dessus d'une ouverture 8 d'une hauteur (suivant la direction Z) de l'ordre de 20 mm et présentant des protubérances 14 d'une hauteur de l'ordre de 20 mm peut être suffisant pour réduire le débit des écoulements transversaux. L'invention n'est toutefois pas limitée par des dimensions ou formes particulières de l'élément aérodynamique 10 et des aspérités pourvu que celles-ci permettent de réduire le débit des écoulements transversaux et de les diriger vers le soubassement du véhicule.

Notamment, et quelle que soit la forme des aspérités, celles-ci pourront être conformées de sorte que les protubérances présentent une hauteur suffisante pour créer une dépression entre le sommet de chaque protubérance et le fond de chaque creux, cette dépression étant suffisante pour réduire le débit d'un flux de fluide venant impacter ces aspérités, notamment d'un flux se déplaçant sensiblement parallèlement à la face 11 de l'élément aérodynamique 10. Une distance de l'ordre de 20 mm entre le fond d'un creux et le sommet d'une protubérance peut ainsi être suffisante. L'homme du métier pourra ainsi conformer un élément aérodynamique pour générer au niveau de chaque aspérité une dépression suffisante pour réduire le débit des écoulements transversaux.

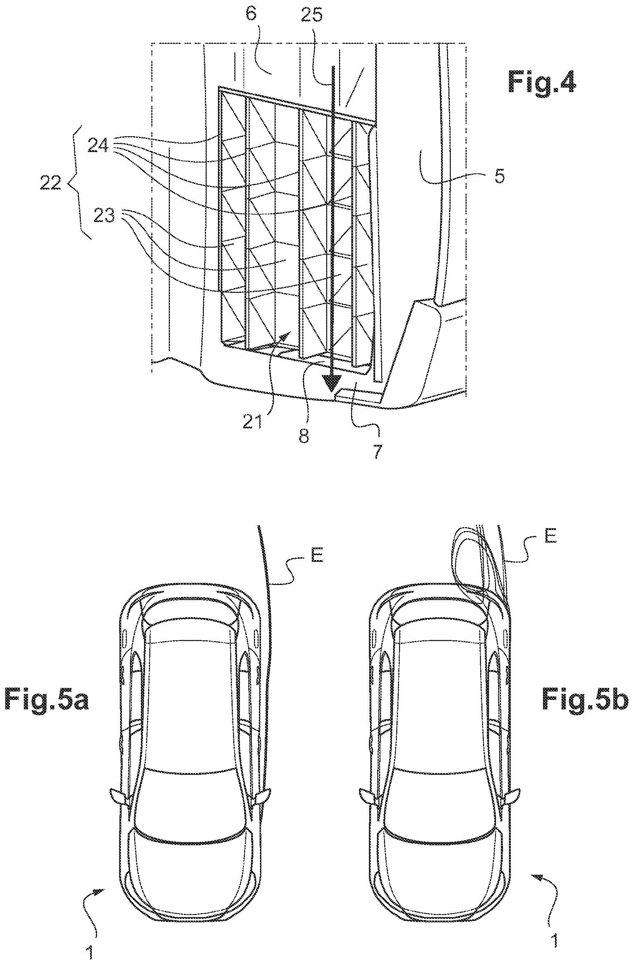

Les figures 5a et 5b montrent les effets d'un élément aérodynamique selon l'invention sur le sillage du véhicule. Sur ces figures, les écoulements de fluide sont symbolisés par les lignes E. On constate que l'élément aérodynamique selon l'invention permet de supprimer les tourbillons à l'arrière du véhicule.

L'invention n'est pas limitée par une forme particulière des aspérités. Ainsi, en variante ou en combinaison, les protubérances peuvent se présenter sous la forme de parois. La figure 4 représente un élément aérodynamique 20 dont une face 21 dirigée vers la roue 2 présente des aspérités 22 définies par des creux 23 et des protubérances 24, ces dernières se présentant sous la forme de parois s'étendant sensiblement verticalement, parallèlement à la direction longitudinale de la bande 5 du passage de roue 4. Ici, l'élément aérodynamique 20 est ainsi formé d'une plaque plane dont une face 21 est pourvue de parois 24 continues, sensiblement perpendiculaires à la plaque. Les creux 23 sont ainsi formés par l'espace libre séparant deux parois 24 adjacentes et définissent des canaux 25 à section sensiblement en forme de U et s'étendant parallèlement les uns aux autres entre les parois 24.

Dans ce mode de réalisation, l'élément aérodynamique 20 est situé à proximité immédiate du bord d'extrémité 7 de la bande 5. Dans ce cas, la bande 5 est également pourvue d'une ouverture 8 dans laquelle est logé, au moins en partie, l'élément aérodynamique 20, de sorte que le fond 24 des canaux 25 soit situé en retrait par rapport à la face concave 6 de la bande 5, permettant ainsi aux écoulements d'être redirigés le long des canaux 25 et de s'écouler par l'ouverture 8 vers le soubassement du véhicule.

Dans les exemples, l'élément aérodynamique 10, 20 est une pièce rapportée fixée à la bande 5 du passage de roue 4 par tout moyen approprié. Cette fixation peut ainsi être obtenue par clippage, collage, rivetage, vissage ou encore soudage dans le cas d'un élément aérodynamique 10, 20 métallique et d'une bande 5 métallique. L'invention n'est toutefois pas limitée à un mode de fixation particulier de l'élément aérodynamique, ni par un matériau particulier de ce dernier, pourvu que l'on puisse réaliser les aspérités précédemment décrites. Notamment, l'élément aérodynamique peut être réalisé d'une pièce avec la bande du passage de roue.

La présente invention peut ainsi être mise en œuvre pour un coût très faible. En outre, l'ajout d'un élément aérodynamique n'impacte que très faiblement l'encombrement du passage de roue de sorte que la solution n'apporte pas de contrainte supplémentaire en ce qui concerne le volume de l'enveloppe de débattement de la roue.

## Revendications

1. Passage de roue (4) de véhicule automobile comprenant une bande (5) allongée courbe destinée à entourer partiellement une roue (2) de véhicule automobile, ladite bande (5) présentant une face concave (6) destinée à s'étendre sensiblement en regard d'une bande de roulement périphérique (3) de la roue, une partie de ladite face concave présentant un élément aérodynamique (10, 20) solidaire de la bande (5) et présentant une face (11, 21) pourvue d'aspérités (12, 22) définies par une pluralité de creux (13, 23) et de protubérances (14, 24), au moins une partie de ladite pluralité de creux définissant des canaux (15, 25) d'évacuation de fluide sensiblement parallèles à la direction longitudinale de ladite bande, **caractérisé en ce que** la bande (5) présente en outre une ouverture (8) entre l'élément aérodynamique (10, 20) et un bord d'extrémité (7) de la bande (5).

2. Passage de roue (4) selon la revendication 1, **caractérisé en ce que** l'élément aérodynamique (10, 20) présente une pluralité de protubérances (14, 24) sensiblement alignées suivant des directions parallèles à ladite direction longitudinale de la bande.

3. Passage de roue (4) selon la revendication 1 ou 2, **caractérisé en ce que** l'élément aérodynamique (10, 20) est adjacent à un bord d'extrémité (7) de la bande (5).

4. Passage de roue (4) selon l'une quelconque des revendications 1 à 3, **caractérisé en ce que** les protubérances (14) de l'élément aérodynamique sont ponctuelles et discontinues.

5. Passage de roue (4) selon l'une quelconque des revendications 1 à 3, **caractérisé en ce que** les protubérances (24) de l'élément aérodynamique s'étendent de manière continue suivant des directions sensiblement parallèles à ladite direction longitudinale de la bande.

6. Passage de roue (4) selon l'une quelconque des revendications 1 à 5, **caractérisé en ce que** l'élément aérodynamique (10, 20) est fixé à ladite bande par clippage, collage, soudage, rivetage ou vissage.

7. Véhicule automobile (1) comportant au moins un passage de roue (4) selon l'une des revendications 1 à 6, dans lequel l'élément aérodynamique (10, 20) est disposé sur une partie arrière du passage de roue.

8. Véhicule automobile, selon la revendication 7, dans lequel les passages de roue des roues avant sont équipés d'un élément aérodynamique, optionnellement les passages de roue des roues arrière sont également équipés d'un élément aérodynamique.

## Patentansprüche

1. Kraftfahrzeugradlauf (4), aufweisend ein lang gestrecktes, gekrümmtes Band (5), welches dafür vorgesehen ist, ein Kraftfahrzeugrad (2) teilweise zu umgeben, wobei das Band (5) eine konkave Fläche (6) aufweist, welche dafür vorgesehen ist, sich einer umlaufenden Lauffläche (3) des Rades zugewandt zu erstrecken, wobei ein Teil der konkaven Fläche ein aerodynamisches Element (10, 20) aufweist, welches fest mit dem Band (5) verbunden ist und eine Fläche (11, 21) aufweist, welche mit Unebenheiten (12, 22) versehen ist, welche durch eine Vielzahl von Vertiefungen (13, 23) und Ausstülpungen (14, 24) definiert werden, wobei mindestens ein Teil der Vielzahl von Vertiefungen im Wesentlichen parallel zu der longitudinalen Richtung des Bandes verlaufende Kanäle (15, 25) zum Abführen von Fluid definiert,
**dadurch gekennzeichnet, dass** das Band (5) außerdem eine Öffnung (8) zwischen dem aerodynamischen Element (10, 20) und einem Endrand (7) des Bandes (5) aufweist.

2. Radlauf (4) nach Anspruch 1, **dadurch gekennzeichnet, dass** das aerodynamische Element (10, 20) eine Vielzahl von Ausstülpungen (14, 24) aufweist, welche im Wesentlichen in parallel zu der longitudinalen Richtung des Bandes verlaufenden Richtungen ausgerichtet sind.

3. Radlauf (4) nach Anspruch 1 oder 2, **dadurch gekennzeichnet, dass** das aerodynamische Element (10, 20) an einem Endrand (7) des Bandes (5) angrenzt.

4. Radlauf (4) nach einem der Ansprüche 1 bis 3, **dadurch gekennzeichnet, dass** die Ausstülpungen (14) des aerodynamischen Elements punktuell und diskontinuierlich sind.

5. Radlauf (4) nach einem der Ansprüche 1 bis 3, **dadurch gekennzeichnet, dass** sich die Ausstülpungen (24) des aerodynamischen Elements in im Wesentlichen parallel zu der longitudinalen Richtung des Bandes verlaufenden Richtungen kontinuierlich erstrecken.

6. Radlauf (4) nach einem der Ansprüche 1 bis 5, **dadurch gekennzeichnet, dass** das aerodynamische Element (10, 20) durch Einrasten, Kleben, Schweißen, Nieten oder Schrauben an dem Band befestigt ist.

7. Kraftfahrzeug (1), umfassend mindestens einen Radlauf (4) nach einem der Ansprüche 1 bis 6, bei welchem das aerodynamische Element (10, 20) an einem hinteren Abschnitt des Radlaufs angeordnet ist.

8. Kraftfahrzeug nach Anspruch 7, bei welchem die Radläufe der Vorderräder mit einem aerodynamischen Element ausgerüstet sind, und optional die Radläufe der Hinterräder ebenfalls mit einem aerodynamischen Element ausgerüstet sind.

## Claims

1. Motor vehicle wheel arch (4) comprising a curved elongate strip (5) intended to partially surround a motor vehicle wheel (2), said strip (5) having a concave face (6) intended to extend substantially opposite a peripheral tread (3) of the wheel, a portion of said concave face having an aerodynamic element (10 and 20) secured to the strip (5) and having a face (11 and 21) provided with rough patches (12 and 22) defined by a plurality of recesses (13 and 23) and protrusions (14 and 24), at least some of said plurality of recesses defining fluid discharge channels (15 and 25) substantially parallel to the longitudinal direction of said strip, **characterized in that** the strip (5) has an opening (8) between the aerodynamic element (10 and 20) and an end edge (7) of the strip (5).

2. Wheel arch (4) according to Claim 1, **characterized in that** the aerodynamic element (10 and 20) has a plurality of protrusions (14 and 24) substantially aligned in directions parallel to said longitudinal direction of the strip.

3. Wheel arch (4) according to Claim 1 or 2, **characterized in that** the aerodynamic element (10 and 20) is adjacent to an end edge (7) of the strip (5).

4. Wheel arch (4) according to any one of Claims 1 to 3, **characterized in that** the protrusions (14) of the aerodynamic element are local and discontinuous.

5. Wheel arch (4) according to any one of Claims 1 to 3, **characterized in that** the protrusions (24) of the aerodynamic element extend in a continuous manner in directions substantially parallel to said longitudinal direction of the strip.

6. Wheel arch (4) according to any one of Claims 1 to 5, **characterized in that** the aerodynamic element (10 and 20) is attached to said strip by clipping, gluing, welding, riveting or screwing.

7. Motor vehicle (1) comprising at least one wheel arch (4) according to one of Claims 1 to 6, in which the aerodynamic element (10 and 20) is arranged on a rear portion of the wheel arch.

8. Motor vehicle, according to Claim 7, in which the wheel arches of the front wheels are provided with an aerodynamic element and, optionally, the wheel arches of the rear wheels are also provided with an aerodynamic element.
